# EUROPÄISCHE PATENTANMELDUNG

(11) **EP 1 830 118 A1**
(43) Veröffentlichungstag der Anmeldung: **05.09.2007**
(21) Anmeldenummer: 07004333.6
(22) Anmeldetag: 02.03.2007
(51) Int. Cl.: F16L 11/22, B29C 49/00

(54) **Mehrkanalschlauch**

(30) Priorität: 03.03.2006 DE 102006010373
(71) Anmelder: GEPOC Verfahrenstechnik GmbH, 52399 Merzenich-Golzheim (DE)
(72) Erfinder: Cornils, Gerd, 52399 Merzenich (DE); Grobusch, Peter, 52459 Inden (DE); Bischof, Thomas, 52074 Aachen (DE)
(74) Vertreter: Patentanwaltskanzlei Liermann-Castell

(57) **Zusammenfassung**

Ein Schlauch, der aus einem Thermoplast einstückig extrudiert ist, weist im Schlauch mindestens einen Steg auf. Dies erlaubt es, den Schlauch mit mehreren Kammern herzustellen, die als Luft- oder Wasserführung sowie als Kabelführung verwendet werden können.

## Beschreibung

Die Erfindung betrifft einen Schlauch, der aus einem Thermoplast einstückig extrudiert ist.

Es ist bekannt, mit einem Extruder unterschiedliche Schlauchformen herzustellen. Hierbei werden Schläuche in unterschiedlichen Materialien extrudiert und auf vorbestimmte Längen geschnitten. Derartige Schläuche können auch nach der Extrusion durch Blasformen in ihrer Form variiert werden. Hierdurch entstehen dreidimensionale Gebilde, die aus einem Schlauchstück hergestellt worden sind.

Der Erfindung liegt die Aufgabe zu Grunde, das Einsatzgebiet derartiger Schläuche durch eine spezielle Herstellungsvariante und Ausbildungsform der Schläuche zu erweitern.

Diese Aufgabe wird mit einem gattungsgemäßen Schlauch gelöst, der im Schlauch mindestens einen Steg aufweist.

Überraschender Weise hat sich herausgestellt, dass beim Extrudieren eines Schlauches auch ein in den Schlauch weisender Steg auf einfache Art und Weise mit extrudiert werden kann. Ein derartiger Steg kann beispielsweise im Schlauch geführte Kabelstränge an eine Schlauchwand drücken. Er kann jedoch auch die Stabilität des Schlauches erhöhen, ohne die Schlauchabmessungen zu vergrößern. Unterschiedliche Einsatzbereiche derartiger Schläuche erschließen weitere Möglichkeiten zur sinnvollen Nutzung eines in den Schlauch hineinragenden Stegs.

Ein in den Schlauch hineinweisender Steg kann entweder mit einem freien Ende im Schlauch enden oder er kann sich durch den gesamten Schlauchinnenraum hindurch erstrecken, sodass der Steg den Schlauch in Kammern teilt. Insbesondere die Teilung des Schlauches mittels des Stegs in zwei Kammern oder die Teilung eines Schlauches mittels mehrer Stege in mehrere Kammern führt zu speziellen Schlauchgeometrien, die neue Einsatzbereiche derartiger Schläuche erschließen.

Eine besondere Ausführungsvariante sieht vor, dass der Schlauch in einer Blasform mit Innendruck geformt ist. Während die Extrusion einem Schlauch über die Schlauchlänge im Wesentlichen den gleichen Querschnitt verleiht, ermöglicht die Verformung eines derartigen extrudierten Schlauches in einer Blasform mittels Innendruck eine über die Schlauchlänge variierende Formgebung.

Die Erfindung betrifft zunächst durch die Extrusion hergestellte plastisch oder elastisch verformbare Schläuche. Dies schließt jedoch Schläuche nicht aus, die nach der Abkühlung eine feste Form aufweisen und sich somit auch während des Einsatzes durch eine vorbestimmte Formgebung auszeichnen.

Hierbei sind zunächst Schläuche zu erwähnen, die eine Längserstreckungsachse aufweisen, die zweidimensional geformt ist. Insbesondere durch die Verwendung von Blasformen können jedoch auch Schläuche mit innenliegenden Stegen gefertigt werden, deren Längserstreckungsachse dreidimensional geformt ist. Die Querschnitte können über die Schlauchlänge variieren.

Für viele Anwendungsfälle ist es von Vorteil, wenn der Schlauch im Querschnitt ein unrundes Außenprofil aufweist. Dies betrifft beispielsweise quadratische oder rechteckige Querschnitte. Es können jedoch auch vorstehende Elemente wie beispielsweise Stege mit Hinterschneidungen am äußeren Profilumfang angeordnet sein.

Weitere Einsatzgebiete erschließen sich, wenn der Schlauch mehrlagig ausgeführt ist. Hierzu können während der Extrusion mehrere Lagen gleicher oder unterschiedlicher Materialen extrudiert werden.

Die der Erfindung zu Grunde liegende Aufgabe wird auch mit einem Verfahren zur Herstellung eines Schlauches gelöst, bei dem der Schlauch aus einer Düse extrudiert wird, welche an einem Roboter angeordnet ist, in eine Blasform eingelegt wird, die Blasform geschlossen wird und der Rohling ausgeformt wird. Mit einem derartigen Verfahren kann ein erfindungsgemäßer Schlauch schnell, günstig und betriebssicher hergestellt werden.

Eine vorteilhafte Verfahrensführung sieht hierbei vor, dass der Schlauch mit mehreren Zentimetern Abstand über der Form extrudiert wird. Ein Ausführungsbeispiel sieht 2 bis 20 cm Abstand vor, wobei jedoch ein Abstand von etwa 5 cm zwischen Düse und Form zu vorteilhaften Ergebnissen führt.

Derartige Schläuche können für unterschiedlichste Anwendungsbereiche eingesetzt werden. Explizit aufzuzählen seien hier Schläuche zur Luft- und/oder zur Wasserführung, der Einsatz derartiger Schläuche als Heizschlauch und als Kabelführung. Insbesondere bei der Ausbildung derartiger Schläuche mit mehreren Kammern, können die Einzelkammern auch verschiedene Funktionen wie beispielsweise Luftführung und Kabelführung übernehmen.

Erfindungsgemäße Schlauchformen als Ausführungsbeispiele sind in der Zeichnung dargestellt.

Es zeigt
Figur 1 einen schematischen Querschnitt durch einen Schlauch mit in der Kammer endendem Steg,
Figur 2 schematisch einen Querschnitt durch einen Schlauch mit den Schlauch in Kammern teilendem Steg,
Figur 3 schematisch einen Querschnitt durch einen Schlauch mit rechteckiger Außenkontur und rechteckigen Kammern.

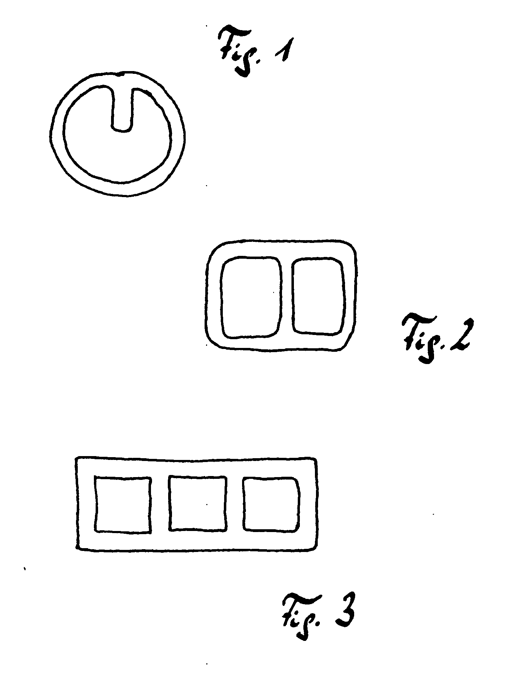

## Patentansprüche

1. Schlauch, der aus einem Thermoplast einstückig extrudiert ist, ***dadurch gekennzeichnet, dass*** der Schlauch mindestens einen Steg aufweist.

2. Schlauch nach Anspruch 1, ***dadurch gekennzeichnet, dass*** der Steg im Schlauch endet.

3. Schlauch nach Anspruch 1, ***dadurch gekennzeichnet, dass*** der Steg den Schlauch in Kammern teilt.

4. Schlauch nach Anspruch 1, ***dadurch gekennzeichnet, dass*** Stege den Schlauch in mehrere Kammern teilen.

5. Schlauch nach einem der vorhergehenden Ansprüche, ***dadurch gekennzeichnet, dass*** der Schlauch in einer Blasform mit Innendruck geformt ist.

6. Schlauch nach einem der vorhergehenden Ansprüche, ***dadurch gekennzeichnet, dass*** der Schlauch eine feste Form aufweist.

7. Schlauch nach Anspruch 6, ***dadurch gekennzeichnet, dass*** die Längserstreckungsachse des Schlauches zweidimensional ist.

8. Schlauch nach Anspruch 6, ***dadurch gekennzeichnet, dass*** die Längserstreckungsachse des Schlauches dreidimensional ist.

9. Schlauch nach Anspruch 6, ***dadurch gekennzeichnet, dass*** der Querschnitt des Schlauches über dessen Längserstreckungsachse variiert.

10. Schlauch nach einem der vorhergehenden Ansprüche, ***dadurch gekennzeichnet, dass*** der Schlauch im Querschnitt ein unrundes Au-βenprofil aufweist.

11. Schlauch nach einem der vorhergehenden Ansprüche, ***dadurch gekennzeichnet, dass*** der Schlauch mehrlagig ausgeführt ist.

12. Verfahren zur Herstellung eines Schlauches nach einem der vorhergehenden Ansprüche, bei dem der Schlauch aus einer Düse extrudiert wird, welche an einem Roboter angeordnet ist, in eine Blasform eingelegt wird, die Blasform geschlossen wird und der Rohling ausgeformt wird.

13. Verfahren nach Anspruch 12, ***dadurch gekennzeichnet, dass*** der Schlauch mit mehreren Zentimetern Abstand über der Form extrudiert wird.

14. Verfahren nach Anspruch 13, ***dadurch gekennzeichnet, dass*** der Schlauch mit 2 bis 20 Zentimetern Abstand, vorzugsweise etwa 5 Zentimetern Abstand über der Form extrudiert wird.
